# EUROPÄISCHE PATENTANMELDUNG

(11) **EP 2 078 901 A2**
(43) Veröffentlichungstag der Anmeldung: **15.07.2009**
(21) Anmeldenummer: 08021640.1
(22) Anmeldetag: 12.12.2008
(51) Int. Cl.: F24D 19/10, F24D 12/02

(54) **Regelgerät für eine Heizungsanlage**

(30) Priorität: 12.01.2008 DE 102008004058
(71) Anmelder: Robert Bosch GmbH, 70442 Stuttgart (DE)
(72) Erfinder: Zecher, Steffen, 35460 Staufenberg (DE)

(57) **Zusammenfassung**

Die Erfindung betrifft ein Regelgerät für eine Heizungsanlage, insbesondere mit multivalentem Aufbau, mit mindestens einem mit fossilen Brennstoffen befeuerten Wärmeerzeuger, mit mindestens einem integrierten Gewinnungssystem für alternative Energien, einer Wärmepumpe und/oder einem weiteren integrierten Wärmeerzeuger, und mit einer Anzeige für Betriebsparameter, Temperaturen und/oder Anlagenfunktionen direkt am Wärmeerzeuger und/oder an mindestens einer zugeordneten Fernbedienung im zu beheizenden Raum.

Es ist Aufgabe der Erfindung, die Bedienung eines Regelgerätes für eine Heizungsanlage, insbesondere mit multivalentem Aufbau, zu optimieren.

Gekennzeichnet ist das Regelgerät dadurch, dass die Anzeige oder ein Teil der Anzeige für Betriebsparameter, Temperaturen und/oder Anlagenfunktionen in Abhängigkeit der Aktivität mindestens eines betreffenden Anlagenteiles wechselt, wobei die für den aktuellen Betriebszustand kennzeichnenden und wichtigen Betriebsparameter, Temperaturen und/oder Anlagenfunktionen in den Vordergrund gestellt werden und/oder nicht kennzeichnende und unwichtige ausgeblendet werden.

## Beschreibung

Die Erfindung betrifft ein Regelgerät für eine Heizungsanlage nach dem Oberbegriff des Patentanspruches 1.

Heizungsanlagen sind häufig multivalent aufgebaut, um einerseits konventionell fossile Brennstoffe wie Öl und Gas, aber andererseits auch umweltfreundliche Energie, zum Beispiel mit einer Solaranlage die Sonnenwärme, mit einem Festbrennstoffkessel aus Biomasse oder mit einer Wärmepumpe aus der Umgebung, zu nutzen. Mit dem konventionell befeuerten Wärmeerzeuger wird in der Regel die Wärmebereitstellung, zum Beispiel an sonnenscheinarmen Tagen oder bei Wärmeverbrauchsspitzen gesichert, zumal neben der Warmwasserbereitung auch die Heizungsunterstützung durch solare Energie an Bedeutung gewinnt.

Ähnliches gilt für multivalente Heizungsanlagen mit beliebigen Kombinationen von Wärmeerzeugern, mit wahlweise integrierten Gewinnungssystemen für alternative Energien, einer Wärmepumpe und/oder einem weiteren integrierten Wärmeerzeuger. Dabei werden immer Anlageteile gemeinsam oder auch einzeln in Betrieb sein. Für einen günstigen Wirkungsgrad der gesamten Heizungsanlage ist es wichtig, dass vorrangig das Gewinnungssystemen für alternative Energien, also zum Beispiel das solare Wärmeangebot, zum Aufheizen des Warmwasserspeichers oder zur Beheizung dient und ein Betrieb des konventionellen Wärmeerzeugers nach Möglichkeit begrenzt wird. Genauso kann ein Festbrennstoffkessel nur phasenweise in Betrieb sein, beispielsweise wenn ein Nutzer dies veranlasst. In diesem Fall soll aber damit dann vorrangig die benötigte Wärme erzeugt werden.

Üblicherweise werden Anlagenteile von multivalenten Heizungsanlagen möglichst weit in das Gesamtsystem integriert. Zum Beispiel gibt es ein gemeinsames Regelgerät für Wärmeerzeuger und Solaranlage, oder die Solaranlage arbeitet selbständig, so dass lediglich die Temperatur des solar beheizten Puffer- oder Warmwasserspeichers in die Regelung der Heizungsanlage einfließt. Daher ist es bei der zuerst erwähnten Variante bekannt, am Regelgerät des Wärmeerzeugers auch Temperaturen des Solarkreislaufs oder Sonnenkollektors abzufragen. Diese Temperaturwerte gehören zu den üblichen Betriebsparametern, Grundeinstellungen und Antagenfunktionen. Sie sind in der Regel erst nach einem Tastendruck am Regelgerät verfügbar. Eventuell wird nur symbolisch der Betrieb der Solarkreispumpe im Display angezeigt. An einer zugeordneten Fernbedienung, beispielsweise im zu beheizenden Raum, werden dagegen üblicherweise nur wenige, ausgewählte Betriebsparameter und Funktionen der Heizungsanlage fest angezeigt, weil die Größe des Displays beschränkt ist und weil ein Raumbenutzer nicht zu stark mit sehr detaillierten, technischen Daten abgelenkt werden soll.

Bekannt ist es daher, die wenigen, ausgewählten Betriebsparameter und Funktionen der Heizungsanlage für die Anzeige bei der Installation auszuwählen und diese Anzeigeart bzw. -gliederung dann abzuspeichern. Damit ist genau diese Werteauswahl immer im Display sichtbar. Nur durch Bedienungseingriffe, durch Drücken oder Drehen einer Taste, gelangt ein Bediener zu anderen Darstellungen, Mess- und/oder Anzeigewerten. Anschließend springt die Anzeige sofort wieder auf den eingestellten Standard zurück. Als wesentlich für den Raum- und Anlagennutzer wurde bisher meistens die Darstellung der Funktionsbereitschaft des Wärmeerzeugers sowie der Außen- und Raumtemperatur angesehen. Damit geben sich viele Nutzer bzw. Betreiber von Heizungsanlagen zufrieden, auch weil eine Verstellung diese Anzeige mit einem Eingriff über ein Bedienmenü verbunden ist, den viele lieber dem zuständigen Fachmann überlassen.

Andererseits haben Nutzer bzw. Betreiber von multivalenten Heizungsanlagen in der Regel Bedarf, Näheres über die Ausnutzung kostenloser oder kostengünstiger Energieformen in der eigenen Anlage zu erfahren. Dieses Interesse besteht zum Beispiel aus Gründen des Umweltbewusstseins, aber auch, weil gattungsgemäße multivalente Heizungsanlagen oftmals mit erheblichen Investitionen verbunden und am Gebäude deutlich sichtbar sind.

Der Erfindung liegt die Aufgabe zugrunde, die Bedienung eines Regelgerätes für eine Heizungsanlage, insbesondere mit multivalentem Aufbau, zu optimieren.

Erfindungsgemäß wird dies mit den Merkmalen des Patentanspruches 1 gelöst. Vorteilhafte Weiterbildungen sind den Unteransprüchen zu entnehmen.

Erfindungsgemäß ist das Regelgerät für eine Heizungsanlage dadurch gekennzeichnet, dass die Anzeige oder ein Teil der Anzeige für Betriebsparameter, Temperaturen und/oder Anlagenfunktionen in Abhängigkeit der Aktivität mindestens eines betreffenden Anlagenteiles wechselt. Dabei werden die für den aktuellen Betriebszustand kennzeichnenden und wichtigen Betriebsparameter, Temperaturen und/oder Anlagenfunktionen in den Vordergrund gestellt und/oder nicht kennzeichnende und unwichtige ausgeblendet.

Das Wechseln der Anzeige oder eines Teils der Anzeige für Betriebsparameter, Temperaturen und/oder Anlagenfunktionen wird in Abhängigkeit der Aktivität des betreffenden Anlagenteiles durch eine Vorrangfunktion sichergestellt, welche durch Schaltzustände von maßgeblichen Anlagenkomponenten und/oder durch den Vergleich von vorgebbaren Schwellwerten für maßgebliche Leistungs-, Wärmemengen-, Solarertrags-, Temperatur- und/oder Volumenstrommesswerte mit aktuellen Werten in der Heizungsanlage gesteuert wird.

In einer ersten Ausführungsvariante werden mindestens für den Anlagenteil mit den aktuell höchsten Werten, also den meisten Schwellwertüberschreitungen, Betriebsparameter, Temperaturen und/oder Anlagenfunktionen vorrangig angezeigt.

Bei einer zweiten Ausführungsvariante ist vorgesehen, dass Betriebsparameter, Temperaturen und/oder Anlagenfunktionen mindestens für den Anlagenteil mit dem aktuell höchsten Anteil am Deckungsgrad des Wärmebedarfes, an der Wärmeerzeugung, der Wärmeabgabe und/oder der Wärmegewinnung vorrangig angezeigt werden.

Ergänzend oder alternativ dazu werden in einer dritten Ausführungsvariante Betriebsparameter, Temperaturen und/oder Anlagenfunktionen mindestens für einen Anlagenteil nur dann angezeigt, wenn dieser positive Werte für Wärmeerzeugung, Wärmeabgabe und/oder Wärmegewinnung liefert.

Generell ist das Wechseln der Anzeige oder eines Teils der Anzeige für Betriebsparameter, Temperaturen und/oder Anlagenfunktionen, die Bedingungen dafür, und somit die Vorrangfunktion werksseitig vorgebbar und bei Bedarf veränderbar bzw. einstellbar. Auch die jeweils einzelnen anzuzeigenden Betriebsparameter, Temperaturen und/oder Anlagenfunktionen sind werksseitig vorgebbar und bei Bedarf veränderbar bzw. einstellbar. Weiterhin können sich das Wechseln der Anzeige oder eines Teils der Anzeige, die dazu erforderlichen Schwellwerte und/oder die einzelnen anzuzeigenden Betriebsparameter, Temperaturen und/oder Anlagenfunktionen bei der Installation und Zuordnung der Anlagenteile am Regelgerät automatisch einstellen. Dies führt bei der Installation zu Erleichterungen und praktischen Vorgaben, die vor Ort, je nach Anlagenkonstellation, noch verändert werden können.

Eine Energiesparanzeige und/oder ein Ökomodus sind ebenfalls auswählbar bzw. einstellbar. Dabei werden im Wesentlichen, also mit Vorrang, Betriebsparameter, Temperaturen und/oder Anlagenfunktionen für mindestens einen Anlagenteil mit einem Gewinnungssystem für alternative Energien, einer Wärmepumpe und/oder einem weiteren integrierten Wärmeerzeuger, angezeigt.

Es kann weiterhin eine Umschaltung für die Vorrangfunktion vorgesehen sein, indem Schaltstellungen an einem Schalter, eine oder mehrere Tasten oder Tastenkombinationen mit einer zusammenstellbaren Vorauswahl von anzuzeigenden Betriebsparametern, Temperaturen und/oder Anlagenfunktionen belegbar sind. Damit ist eine einfache Anpassung an die betreffende Anlagenkonstellation sowie an eventuell besondere, unterschiedliche und/oder wechselnde Gewohnheiten und Interessen der Nutzer möglich, wobei auch für die Nutzer dann die Bedienung bzw. Umschaltung sehr einfach ist.

Optional kann am Regelgerät eine Schnittstelle zur Datenübertragung an nicht zur Heizungsanlage gehörende Anzeige- oder Auswertevorrichtungen vorgesehen sein, um auf Basis der Ansteuerung der Anzeige oder eines Teils der Anzeige die Aktivität mindestens eines Anlagenteiles zu signalisieren und extern anzuzeigen, beispielsweise um den Betrieb und charakteristische Werte der Solaranlage an einem anderen markanten Ort in oder am Gebäude zu visualisieren.

Mit der Erfindung wird die Bedienung eines Regelgerätes für eine Heizungsanlage, insbesondere mit multivalentem Aufbau, optimiert. Der Bediener wird effektiv über den Betrieb seiner relativ aufwändigen Heizungsanlage informiert. Besonders die umweltschonende Wärmeerzeugung sowie die Ausnutzung kostenloser oder kostengünstiger Energieformen in der eigenen Anlage stehen dabei im Vordergrund. Die Visualisierung gezielter, charakteristischer Anlagen-Betriebswerte an gut zugänglichen Stellen im Bereich des zu beheizenden Objekts führt zu einer stärkeren Identifikation mit der eigenen Anlage. Einstellungen und Bedienungsschritte am Regelgerät müssen nicht mehr selbst vorgenommen werden, um markante Werte zu sehen. Gleichzeitig ergibt sich eine einfache Funktionskontrolle, wenn Werte der verschiedenen Anlagenteile automatisch ins Blickfeld des Bedieners gerückt werden.

Nachfolgend wird ein Ausführungsbeispiel der Erfindung anhand einer multivalenten Heizungsanlage beschrieben, welche im Wesentlichen aus einem mit fossilen Brennstoffen befeuerten Wärmeerzeuger, einer Solaranlage und einem Festbrennstoffkessel besteht. Diese sind miteinander über einen gemeinsam zu beheizenden Pufferspeicher verknüpft, von dem aus ein Heizkreis sowie ein Warmwasserspeicher mit Wärme versorgt werden. Alle Komponenten sind an ein gemeinsames Regelgerät angeschlossen. Betriebsparameter, Temperaturen und/oder Anlagenfunktionen stehen direkt am Wärmeerzeuger und an einer zugeordneten Fernbedienung im zu beheizenden Raum zum Anzeigen zur Verfügung.

Reicht alleine der Festbrennstoffkessel für die Beheizung der Nutzfläche aus, wird die Anzeige alleine auf diese Betriebswerte hin optimiert. Dazu können Festbrennstoffkessel-Vorlauf oder -Abgastemperatur gehören. Je nach Nutzerwunsch bzw. Einstellung sind dann auch Außen- und Heizkreis-Vorlauftemperatur sichtbar. Diese bleiben, wenn nun, zum Beispiel wegen paralleler Warmwasserbereitung, der fossil befeuerte Wärmeerzeuger zusätzlich zuschalten muss. In der Anzeige werden aber ein paar Messwerte im Zusammenhang mit dem Festbrennstoffkessel entfernt und durch die Kesseltemperatur des Wärmeerzeugers und die Warmwassertemperatur ergänzt. Übernimmt nun vielleicht nach Sonnenaufgang die Solaranlage einen geringen Teil der Wärmeversorgung, so wird auch die Kollektortemperatur im Display sichtbar. Reduziert sich der Wärmeverbrauch oder steigt der Solarertrag so weit, dass nur noch die Solaranlage alleine in Betrieb ist, dann werden automatisch bis auf Außen-, Warmwasser- und Heizkreis-Vorlauftemperatur nur charakteristische Werte der Solaranlage, eventuell auch der Solarertrag, angezeigt.

## Patentansprüche

1. Regelgerät für eine Heizungsanlage, insbesondere mit multivalentem Aufbau, mit mindestens einem mit fossilen Brennstoffen befeuerten Wärmeerzeuger, mit mindestens einem integrierten Gewinnungssystem für alternative Energien, einer Wärmepumpe und/oder einem weiteren integrierten Wärmeerzeuger, und mit einer Anzeige für Betriebsparameter, Temperaturen und/oder Anlagenfunktionen direkt am Wärmeerzeuger und/oder an mindestens einer zugeordneten Fernbedienung im zu beheizenden Raum,
**dadurch gekennzeichnet, dass** die Anzeige oder ein Teil der Anzeige für Betriebsparameter, Temperaturen und/oder Anlagenfunktionen in Abhängigkeit der Aktivität mindestens eines betreffenden Anlagenteiles wechselt, wobei die für den aktuellen Betriebszustand kennzeichnenden und wichtigen Betriebsparameter, Temperaturen und/oder Anlagenfunktionen in den Vordergrund gestellt werden und/oder nicht kennzeichnende und unwichtige ausgeblendet werden.

2. Regelgerät nach Anspruch 1,
**dadurch gekennzeichnet, dass** das Wechseln der Anzeige oder eines Teils der Anzeige für Betriebsparameter, Temperaturen und/oder Anlagenfunktionen in Abhängigkeit der Aktivität des betreffenden Anlagenteiles durch eine Vorrangfunktion sichergestellt wird.

3. Regelgerät nach den Ansprüchen 1 oder 2,
**dadurch gekennzeichnet, dass** die Vorrangfunktion durch Schaltzustände von maßgeblichen Anlagenkomponenten und/oder durch den Vergleich von vorgebbaren Schwellwerten für maßgebliche Leistungs-, Wärmemengen-, Solarertrags-, Temperatur- und/oder Volumenstrommesswerte mit aktuellen Werten in der Heizungsanlage gesteuert wird.

4. Regelgerät nach einem der Ansprüche 1 bis 3,
**dadurch gekennzeichnet, dass** Betriebsparameter, Temperaturen und/oder Anlagenfunktionen mindestens für den Anlagenteil mit den aktuell höchsten Werten, also den meisten Schwellwertüberschreitungen, vorrangig angezeigt werden.

5. Regelgerät nach einem der Ansprüche 1 bis 4,
**dadurch gekennzeichnet, dass** Betriebsparameter, Temperaturen und/oder Anlagenfunktionen mindestens für den Anlagenteil mit dem aktuell höchsten Anteil am Deckungsgrad des Wärmebedarfes, an der Wärmeerzeugung, der Wärmeabgabe und/oder der Wärmegewinnung vorrangig angezeigt werden.

6. Regelgerät nach einem der Ansprüche 1 bis 5,
**dadurch gekennzeichnet, dass** Betriebsparameter, Temperaturen und/oder Anlagenfunktionen mindestens für einen Anlagenteil nur dann angezeigt werden, wenn dieser positive Werte für Wärmeerzeugung, Wärmeabgabe und/oder Wärmegewinnung liefert.

7. Regelgerät nach einem der Ansprüche 1 bis 6,
**dadurch gekennzeichnet, dass** das Wechseln der Anzeige oder eines Teils der Anzeige für Betriebsparameter, Temperaturen und/oder Anlagenfunktionen, die Bedingungen dafür, und somit die Vorrangfunktion, werksseitig vorgebbar und bei Bedarf einstellbar ist.

8. Regelgerät nach einem der Ansprüche 1 bis 7,
**dadurch gekennzeichnet, dass** die einzelnen anzuzeigenden Betriebsparameter, Temperaturen und/oder Anlagenfunktionen werksseitig vorgebbar und bei Bedarf einstellbar sind.

9. Regelgerät nach einem der Ansprüche 1 bis 8,
**dadurch gekennzeichnet, dass** sich das Wechseln der Anzeige oder eines Teils der Anzeige, die dazu erforderlichen Schwellwerte und/oder die einzelnen anzuzeigenden Betriebsparameter, Temperaturen und/oder Anlagenfunktionen bei der Installation und Zuordnung der Anlagenteile am Regelgerät einstellen.

10. Regelgerät nach einem der Ansprüche 1 bis 9,
**dadurch gekennzeichnet, dass** eine Energiesparanzeige und/oder ein Ökomodus auswählbar bzw. einstellbar ist, wobei im Wesentlichen Betriebsparameter, Temperaturen und/oder Anlagenfunktionen für mindestens einen Anlagenteil mit einem Gewinnungssystem für alternative Energien, einer Wärmepumpe und/oder einem weiteren integrierten Wärmeerzeuger, angezeigt werden.

11. Regelgerät nach einem der Ansprüche 1 bis 10,
**dadurch gekennzeichnet, dass** eine Umschaltung für die Vorrangfunktion vorgesehen ist, indem Schaltstellungen an einem Schalter, eine oder mehrere Tasten oder Tastenkombinationen mit einer zusammenstellbaren Vorauswahl von anzuzeigenden Betriebsparametern, Temperaturen und/oder Anlagenfunktionen belegbar sind.

12. Regelgerät nach einem der Ansprüche 1 bis 11,
**gekennzeichnet durch** eine Schnittstelle zur Datenübertragung an nicht zur Heizungsanlage gehörende Anzeige- oder Auswertevorrichtungen, um auf Basis der Ansteuerung der Anzeige oder eines Teils der Anzeige die Aktivität mindestens eines Anlagenteiles zu signalisieren und extern anzuzeigen.
